# EUROPEAN PATENT SPECIFICATION

(11) **EP 3 922 515 B1**
(45) Date of publication and mention of the grant of the patent: **22.05.2024**
(21) Application number: 20752299.6
(22) Date of filing: 04.02.2020
(51) Int. Cl.: B60R 1/00, B60R 1/074, F16H 1/16

(54) **PERIPHERY VISUAL RECOGNITION DEVICE FOR ELECTRIC RETRACTABLE VEHICLE**
VORRICHTUNG ZUR VISUELLEN UMGEBUNGSERKENNUNG FÜR ELEKTRISCHES EINKLAPPBARES FAHRZEUG
DISPOSITIF DE RECONNAISSANCE VISUELLE PÉRIPHÉRIQUE POUR VÉHICULE ÉLECTRIQUE RÉTRACTABLE

(30) Priority: 04.02.2019 JP 2019018246
(43) Date of publication of application: 15.12.2021
(73) Proprietor: Misato Industries Co., Ltd., Fujioka-shi, Gunma-ken 375-0024 (JP)
(72) Inventor: SAKATA Ikuo, Isehara-shi, Kanagawa 259-1192 (JP)
(74) Representative: Reeve, Nicholas Edward
(86) International application number: PCT/JP2020/004138
(87) International publication number: WO 2020/162456

(56) References cited:
- JP-A- H10 230 788
- JP-A- 2006 044 514
- JP-A- 2012 111 445
- US-A1- 2018 111 558
- US-B2- 8 845 112

## Description

### TECHNICAL FIELD

The present invention relates to an electric retractable periphery visual recognition device for vehicle.

### BACKGROUND ART

Conventionally, included are a stay fixed to a door of a vehicle, a retraction mechanism supported by the stay, a camera supported by a rotary body of the retraction mechanism, and a monitor installed inside a vehicle. A retraction mechanism of a visual recognition device for a vehicle of Japanese Unexamined Patent Publication No. 2018-192892 is known to be a visual recognition device for a vehicle including a support shaft, a case and a cover of a rotary body rotatably supported by the support shaft, and a motor and a speed reduction mechanism of a drive mechanism housed in the case and the cover (for example, refer to JP2018-192892). The visual recognition device for a vehicle displays an image captured by a camera on a monitor. In the visual recognition device for a vehicle of JP2018-192892, the rotary body turns from an upright (expanded, returned) position to the back side of the vehicle and also turns from the back side of the vehicle to the upright position relative to the stay by driving the motor. In such a visual recognition device for a vehicle (electric retractable periphery visual recognition device for vehicle), it is preferable to smoothly rotate an automatic body.

However, since the visual recognition device for a vehicle of Japanese Unexamined Patent Publication No. 2018-192892 accommodates the body portion of the motor directly between the lower restricting part of the case and the upper restricting part of the cover, rattling may occur between the motor, the case, and the cover. As a result, the visual recognition device for a vehicle of JP2018-192892 may not be able to smoothly rotate the rotary body.

US2018/111558 discloses an electric retracting unit that includes a rotating body. The rotating body includes an outer plate (motor holding member) that holds a motor body of a motor. The outer plate includes a barrel and a claw engagement piece. The barrel receives the motor body in an inner space. The claw engagement piece engages with a rear end face (engaged portion) of the motor body received in the barrel and locks the motor so as to prevent axial movement. An engagement surface of the engagement claw of the claw engagement piece is disposed at a position on a deeper side of the inner space relative to an open end of the inner space of the barrel. The unit aims to enhance the motor holding performance of a motor holding member in an electric retractable view device for a vehicle.

Therefore, we have appreciated that it would be desirable to smoothly rotate a visual recognition assembly in an electric retractable periphery visual recognition device for vehicle.

### SUMMARY OF THE INVENTION

The invention is defined in the independent claim to which reference should now be made. Advantageous features are set forth in the dependent claims.

According to an aspect of the disclosure, an electric retractable periphery visual recognition device for a vehicle is provided, the electric retractable periphery visual recognition device comprises: a base fixed to a vehicle body; a shaft fixed to the base; and a visual recognition assembly rotatably attached to the shaft, wherein, the visual recognition assembly includes a housing; a visual recognition unit mounted on the housing; an electric retractable unit that rotates the visual recognition assembly between a use position and a rear retracted position, at least a portion of the electric retractable unit being housed inside the housing. The electric retractable unit includes the shaft fixed to the base; a casing rotatably attached to the shaft and fixed to the housing; a motor and a speed reduction mechanism attached to the casing and housed inside the casing; and a holding member that holds the motor and is attached to and housed inside the casing together with the motor and the speed reduction mechanism, the casing includes a member having a rigidity higher than the rigidity of the holding member, and comprises a positioning portion that sandwiches, positions, and fixes the holding member (7H), and the holding member includes an elastic member.

### EFFECT OF THE INVENTION

According to the disclosure, a visual recognition assembly can be smoothly rotated in an electric retractable periphery visual recognition device for vehicle.

### BRIEF DESCRIPTION OF THE DRAWINGS

FIG. 1 is a plan view of an electric retractable periphery visual recognition device for vehicle according to an embodiment in a use state.
FIG. 2 is a plan view of the left side of the electric retractable periphery visual recognition device for vehicle installed on a left side door of a vehicle in a use position, a rear retracted position, and a front retracted position.
FIG. 3 is a perspective view of an electric retractable left side of the electric retractable periphery visual recognition device for vehicle.
FIG. 4 is a perspective view of the left side electric retractable periphery visual recognition device for vehicle in state in which a housing is removed.
FIG. 5 is an exploded perspective view of components of an electric retractable unit of the left side electric retractable periphery visual recognition device for vehicle.
FIG. 6 is a perspective view of an operation of a motor, a speed reduction mechanism, a clutch mechanism, and a rotational force transmission mechanism, a stopper mechanism, and a shaft, which are the major parts of the electric retractable unit of the electric retractable periphery visual recognition device for vehicle.
FIG. 7 is a partial longitudinal cross-sectional view (a cross-section view taken along line VII-VII in FIG. 5) of a motor, a speed reduction mechanism, a plate, and a casing, which are major parts of the electric retractable unit of the left side of the electric retractable periphery visual recognition device for vehicle.
FIG.8 is a functional block diagram illustrating the overall configuration.
FIG. 9 is a partial longitudinal cross-sectional view (a cross-sectional view taken along line IX-IX in FIG. 7) of a holding member and a casing in an attached state to an end cap portion of the motor.
FIG. 10 is a partial longitudinal cross-sectional view (a cross-sectional view taken along line X-X in FIG. 7) of the holding member and the casing in an attached state to a cylindrical portion of the motor.
FIG. 11 is a partial longitudinal cross-sectional view (a cross-sectional view taken along line XI-XI in FIG. 7) of the holding member and the casing in an attached state to a second worm gear and a helical gear of the speed reduction mechanism.
FIG. 12 is a partial longitudinal cross-sectional view (a cross-sectional view taken along line XII-XII in FIG. 7) of the holding member and the casing in an attached state to a first worm gear of the speed reduction mechanism.
FIG. 13 is a diagram illustrating a state before the motor is held by the holding member.
FIG. 14 is a diagram illustrating a state before the cylindrical portion of the motor is held by a first fitted holding portion of the holding member.
FIG. 15 is a diagram illustrating a state in which the motor is held by the holding member and a state before the first worm gear coupled to a drive shaft of the motor.
FIG. 16 is a diagram illustrating a state in which the first worm gear coupled to the drive shaft of the motor.
FIG. 17 is a diagram illustrating a holding member. FIG. 17A is a plan view of the holding member. FIG. 17B is a perspective view of the holding member. FIG. 17C is a left side view of the holding member. FIG. 17D is a front view of the holding member. FIG. 17E is a right side view of the holding member. FIG. 17F is a back view of the holding member. FIG. 17G is a bottom view of the holding member.

### EXAMPLE EMBODIMENTS

An electric retractable periphery visual recognition device for vehicle according to an example of an embodiment (example) will now be described in detail with reference to the drawings. The front, back, top, bottom, left, and right in the specification and the appended claims coincide with the front, back, top, bottom, left, and right of the electric retractable periphery visual recognition device for vehicle mounted on a vehicle. Note that, as schematically illustrated in the drawings, main components are illustrated and components other than the main components are omitted from the drawings, and hatching is partially omitted.

### (Description of Configuration of Embodiment)

The configuration of the electric retractable periphery visual recognition device for vehicle according to this embodiment will now be described.

In the drawings, reference numeral 1 indicates an electric retractable periphery visual recognition device for vehicle (hereinafter, simply referred to as a "visual recognition device") according to this embodiment.

### (Description of Electric retractable periphery visual recognition device for vehicle 1)

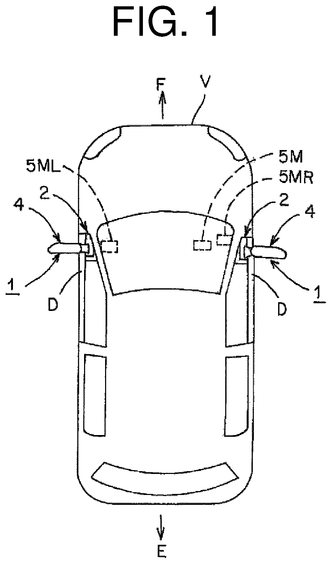

As illustrated in FIG. 1, visual recognition devices 1 are mounted on left and right doors (vehicle bodies) D of a vehicle (an automobile) V. The visual recognition devices 1 are alternatives to rear view mirrors for vehicles, that is, for example, outside mirror devices (not illustrated), such as door mirror devices mounted on the left and right doors D of the vehicle.

The visual recognition device 1 mounted on the left door D of the vehicle V will now be described. Note that the visual recognition device 1 mounted on the right door D of the vehicle V has substantially the same configuration as the visual recognition device 1 mounted on the left door D of the vehicle V, and thus the description of the visual recognition device 1 mounted on the right door D will be omitted.

The visual recognition devices 1 include bases 2, shafts 3, visual recognition assemblies 4, and display devices (monitors) 5M, 5ML, and 5MR, as illustrated in FIGS. 1 to 4 and FIG. 8. The bases 2, the shafts 3 and the visual recognition assemblies 4 are mounted on the doors D, and the display devices 5M, 5ML, and 5MR are mounted on the interior (inside) of the vehicle V

That is, the left display device 5ML is mounted close to the left visual recognition assembly 4. The right display device 5MR is mounted close to the right visual recognition assembly 4. The center display device 5M is mounted close to a driver's seat. Note that either the left display device 5ML and the right display device 5ML or the center display device 5M, or both may be mounted.

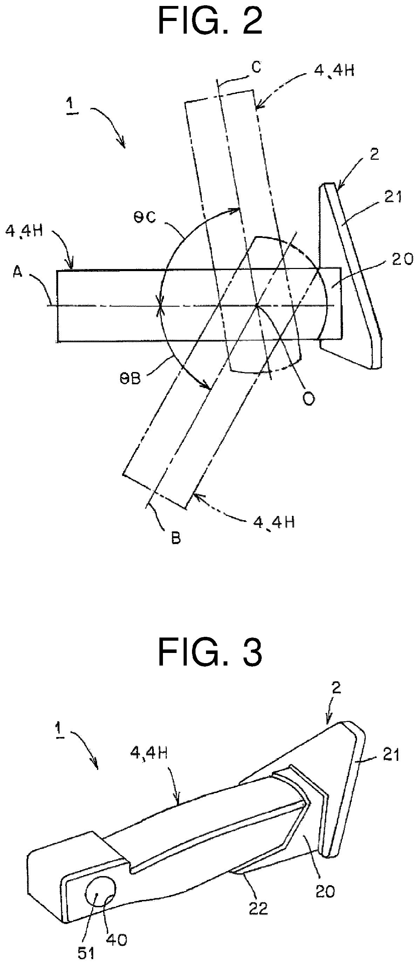

In FIG. 2, the reference character A indicates the use position of the visual recognition assembly 4. The reference character B indicates the rear retracted position of the visual recognition assembly 4. The reference character C indicates the front retracted position of the visual recognition assembly 4. The reference character E indicates the back side of the vehicle V The reference character F indicates the front side of the vehicle V The reference character O indicates the rotation center line of the visual recognition assembly 4 and the center line of a shaft portion 30 of the shaft 3. The rotation center line will be hereinafter referred to as a "rotation center line O."

Similarly, in FIG. 2, the reference characters ΘB indicates the angle at which the visual recognition assembly 4 rotates from the use position A to the rear retracted position B to be retracted to the rear retracted position B i.e., the rearward rotation retraction angle. The rearward rotation retraction angle ΘB is also the angle at which the visual recognition assembly 4 is electrically rotated between the use position A and the rear retracted position B, i.e., the electric rotation angle. In this example, the rearward rotation retraction angle ΘB is approximately 60 degrees.

Similarly, in FIG. 2, the reference characters ΘC indicates the angle at which the visual recognition assembly 4 rotates from the use position A to the front retracted position C to be retracted to the front retracted position C i.e., the forward rotation retraction angle. In this example, the forward rotation retraction angle ΘC is approximately 90 degrees.

When the visual recognition units 5 described below of the visual recognition assemblies 4 are cameras, the rearward rotation retraction angle ΘB and the forward rotation retraction angle ΘC are the same angles for the left visual recognition device 1 and the right visual recognition device 1. When the visual recognition units 5 are mirrors, the angle of the left visual recognition device 1 is different from the angle of the right visual recognition device 1.

### (Description of Base 2)

The base 2 includes a base member and a cover member that covers the base member.

The base 2 has a rectangular parallelepiped coupling portion 20, a vertical plate-shaped first fixing portion 21, and a horizontal plate-shaped second fixing portion 22, as illustrated in FIGS. 1 to 4. The interior of the base 2 communicates with the interior of the vehicle V via a gateway (not illustrated) provided in the body panel of the door D or the door panel.

The first fixing portion 21 is fixed to the door D by a screw or the like (not illustrated). As a result, the base 2 is fixed to the door D, i.e., the vehicle body. The shaft 3 is fixed to the second fixing portion 22 by a screw or the like. Note that the second fixing portion 22 has recess. A fixed portion 32 of the shaft 3 is fitted in the recess of the second fixing portion 22. As a result, the flat surface (upper surface) of the second fixing portion 22 and the flat surface (upper surface) of the fixed portion 32 of the shaft 3 are flush.

### (Description of Shaft 3)

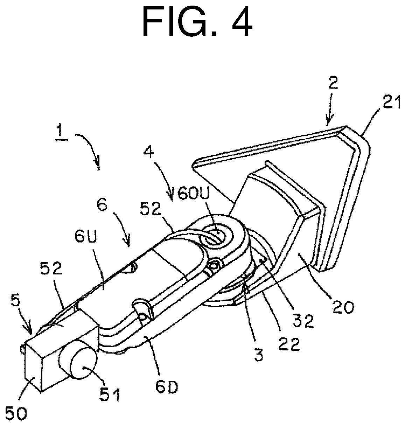

The shaft 3 has a hollow cylindrical-shaped shaft portion 30, a disc-shaped disk portion 31, and a square planar fixed portion 32, as illustrated in FIGS. 4 to 6. That is, the disk portion 31 is integrally provided at the lower end of the shaft portion 30. The fixed portion 32 is integrally provided on the lower surface of the disk portion 31.

The center line O of the shaft portion 30 passes through the center of the disk portion 31. A portion (square plate portion) of the fixed portion 32 protrudes toward the door D relative to the shaft portion 30 and the disk portion 31. The disk portion 31 and the fixed portion 32 are provided with through-holes having a circular shape or any other shape communicating with the hollow portion of the shaft portion 30.

An octagonal engagement portion 33 is disposed on the outer periphery of the shaft portion 30. Note that the engagement portion 33 is octagonal (polygonal) in this example, but may also be a serration or spline engagement portion. A circular engagement groove 34 is disposed on the outer periphery of the upper end of the shaft portion 30.

The fixed portion 32 is fitted in the recess of the second fixing portion 22 of the base 2 and is fixed to the second fixing portion 22 of the base 2 by a screw or the like. As a result, the shaft 3 is fixed to the base 2.

Electrically operated range restricting protrusions 35 of a stopper mechanism are disposed on the upper surface of the disk portion 31. That is, two electrically operated range restricting protrusions 35 are disposed on the upper surface of the disk portion 31. The two electrically operated range restricting protrusions 35 are disposed on the shaft portion 30, at a portion on the protruding side of the fixed portion 32 and at a portion opposite to the protruding side of the fixed portion 32.

The electrically operated range restricting protrusions 35, together with contacting portions of the spring members 9S described below, restricts the range (electrically operated range) in which the visual recognition assembly 4 is electrically rotated between the use position A and the rear retracted position B. That is, the electrically operated range restricting protrusions 35, together with the contacting portions of the spring members 9S described below, constitutes a stopper mechanism to stop the visual recognition assembly 4 in the use position A and the rear retracted position B.

A retracting operation range restricting portion is disposed on the upper surface of the disk portion 31. That is, one retracting operation range restricting protrusion 36 is disposed on the upper surface of the disk portion 31 on the outer peripheral edge remote from the shaft portion 30 and on the protruding side of the fixed portion 32.

The retracting operation range restricting protrusion 36, together with the retracting operation range restricting portion (retracting operation range restricting protrusion) of the lower casing 6D described below, restricts the retracting operation range of the visual recognition assembly 4. The retracting operation range restricting protrusion 36 has an arc shape centered on the center line O of the shaft portion 30.

### (Description of Visual Recognition Assembly 4)

The visual recognition assembly 4 is rotatably attached to the shaft portion 30 of the shaft 3, as illustrated in FIGS. 1 to 4. The visual recognition assembly 4 includes a housing 4H, a visual recognition unit 5, and an electric retractable unit 6.

### (Description of Housing 4H)

The housing 4H has a hollow box shape, as illustrated in FIGS. 1 to 3. In this example, the housing 4H has two parts that are fixed to each other in a watertight manner by fitting, gluing, welding, or the like. A circular through-hole 40 is provided in the rear surface of the end of the housing 4H remote from the shaft 3.

Portions of the visual recognition unit 5 and the electric retractable unit 6 are housed in the housing 4H. That is, the fixed portion 32 of the shaft 3 of the electric retractable unit 6 is positioned outside the housing 4H and is fitted to the second fixing portion 22 of the base 2. Accordingly, a large portion of the electric retractable unit 6, except for the fixed portion 32 of the shaft 3, is housed in the housing 4H.

### (Description of Visual Recognition Unit 5)

In the example, the visual recognition unit 5 is an image capturing device (camera) that captures information on periphery of the vehicle V as an image. The visual recognition unit 5 includes a body 50, a lens 51, and a harness 52, as illustrated in FIGS. 3 and 4. The visual recognition unit 5 is housed in the housing 4H and mounted on the housing 4H.

The body 50 is fixed to the housing 4H by screws or the like. The lens 51 faces the through-hole 40 of the housing 4H. The harness 52 is connected to the body 50. The harness 52 is routed from within the housing 4H to the interior of the vehicle V through the shaft 3 and the base 2. The harness 52 is provided with a connector electrically connectable to the electric retractable unit 6.

To capture a visual range equal to or wider than a visual range of the lateral side and the back side of the vehicle V of the existing outside mirror device (not illustrated) with the use of the visual recognition unit 5, the visual recognition unit 5 needs to be positioned so as to protrude outward from the door D. Therefore, when the visual recognition assembly 4 is in the use position A, the housing 4H, which accommodates the visual recognition unit 5, protrudes outwardly from the door D. Note that the protrusion of the housing 4H may be smaller than the protrusion of the existing outside mirror device.

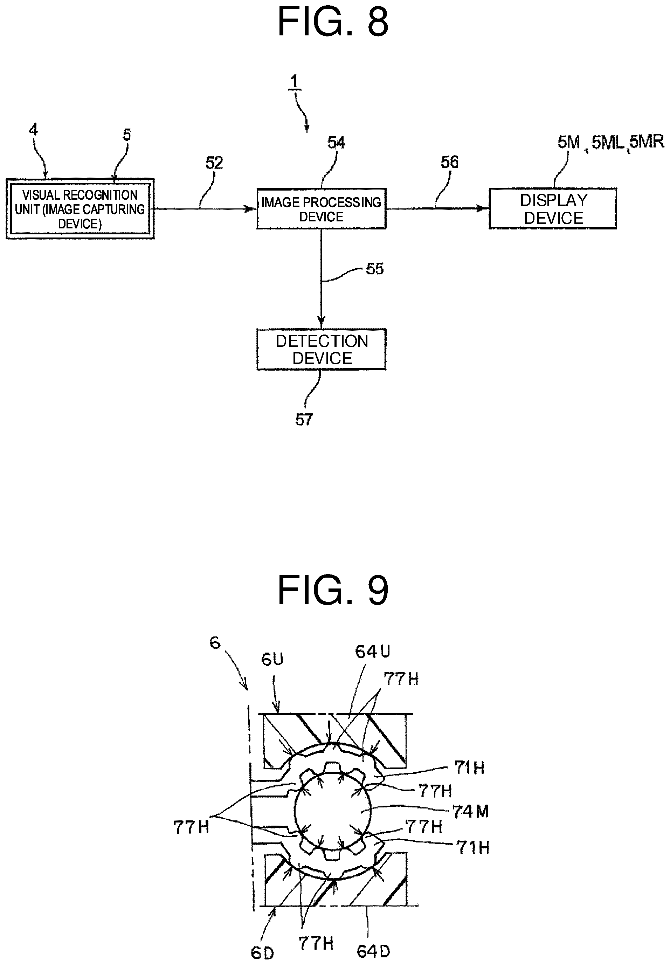

The visual recognition unit 5 is connected to an image processing device (image processing ECU) 54 via the harness 52, as illustrated in FIG. 8. The image processing device 54 is connected to a detection device 57 and the display devices 5M, 5ML, and 5MR via signal lines 55 and 56, respectively.

The visual recognition unit 5 as the image capturing device captures information on the periphery of the vehicle V, i.e., on the back side and the lateral side of the vehicle V, as images, and outputs the images of the information on the back side and the lateral side of the vehicle V via the harness 52 to the image processing device 54.

The detection device 57 is mounted in the vehicle V The detection device 57 is connected to the image processing device 54 via the signal line 55. The detection device 57 detects vehicle information and outputs the detected vehicle information as a detection signal to the image processing device 54 via the signal line 55. For example, the detection device 57 is any one of or a combination of a steering angle detection unit (steering angle sensor), a gear position detection unit (gear position sensor), a direction instruction detection unit (direction instruction sensor), a vehicle speed detection unit (vehicle speed sensor), a vehicle position detection unit (vehicle position sensor), an ultrasonic detection unit (ultrasonic sensor), and other detection units.

The image processing device 54 is mounted in the vehicle V The image processing device 54 is connected to the visual recognition unit 5, the detection device 57, and the display devices 5M, 5ML, and 5MR via the harness 52 and the signal lines 55 and 56, respectively. The image processing device 54 appropriately processes the images, captured by the visual recognition unit 5, of the information on the back side and the lateral side of the vehicle V in accordance with the vehicle information from the detection device 57. Note that the image processing device 54 may process the images, captured by the visual recognition unit 5, of the information on the back side and the lateral side of the vehicle V not on the basis of the vehicle information from the detection device 57 but a manual operation by a driver. The image processing device 54 outputs the processed images to the display devices 5M, 5ML, and 5MR.

The display devices 5M, 5ML, and 5MR are mounted in the interior (inside) of the vehicle V in the visual range of the driver. The display device 5M is connected to the image processing device 54 via the signal line 56. The display devices 5M, 5ML, and 5MR display images processed by the image processing device 54. The driver visually recognizes the image displayed by the display devices 5M, 5ML, and 5MR and thereby can visually recognize the back side and the lateral side of the vehicle V

### (Description of Electric Retractable Unit 6)

The electric retractable unit 6 is partially housed in the housing 4H, as illustrated in FIGS. 4 to 8, and electrically rotates the visual recognition assembly 4 between the use position A and the rear retracted position B. The electric retractable unit 6 includes the aforementioned shaft 3, casings 6U and 6D, a motor 7M, a speed reduction mechanism 7, a holding member (plate, holding plate) 7H, a clutch mechanism 8, a rotational force transmission mechanism 9, and a spring member 9S of a stopper mechanism.

The motor 7M, the speed reduction mechanism 7, the holding member 7H, a portion of the clutch mechanism 8, the rotational force transmission mechanism 9, and the spring members 9S are housed in the casings 6U and 6D. The motor 7M, the speed reduction mechanism 7, the holding member 7H, and the clutch mechanism 8 are arranged in a direction intersecting (orthogonal or almost orthogonal to) the axial direction of the shaft 3. The axial direction of the drive shaft (output shaft, rotary shaft) 71M of the motor 7M and the axial direction of the shaft 3 intersect (orthogonal to or almost orthogonal to) each other. Here, an axial direction of the shaft 3 is the direction of the rotation center line O.

### (Description of Casings 6U and 6D)

The casings 6U and 6D are rotatably attached to the shaft 3 and fixed to the housing 4H by screws or the like, as illustrated in FIGS. 4, 5, 7, and 9 to 12.

The casings 6U and 6D consist of an upper casing (cover) 6U and a lower casing (gear case) 6D. The upper casing 6U and the lower casing 6D are fixed to each other by a plurality of screws 60, four screws in this example. The casings 6U and 6D are composed of members having rigidity is higher than that of the holding member 7H, such as a synthetic resin material with glass fibers (PA material).

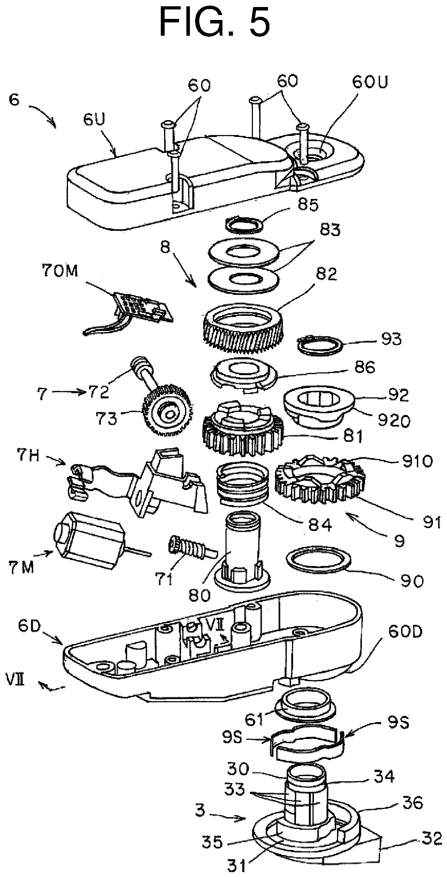

A circular through-hole 60U is provided at one end of the upper casing 6U, as illustrated in FIGS. 4 and 5. The circumferential edge of the through-hole 60U forms a cylindrical portion recessed from the upper casing 6U. The upper end of the shaft portion 30 of the shaft 3 is fitted over the cylindrical portion of the upper casing 6U. As a result, the upper casing 6U is rotatably attached to the shaft portion 30 of the shaft 3. The center line of the cylindrical portion of the upper casing 6U (the center of the through-hole 60U) coincides with the center line O of the shaft portion 30 of the shaft 3, i.e., the rotation center line O.

A loading portion 60D is integrally provided at the bottom surface (lower surface) of one end of the lower casing 6D, as illustrated in FIG. 5. The planar shape (viewed from above) or the bottom shape (viewed from below) of the loading portion 60D is a disc shape. A circular through-hole is provided in the center of the loading portion 60D. The center of the loading portion 60D and the center of the through-hole are concentric and coincide with the rotation center line O.

The shaft portion 30 of the shaft 3 is inserted in the through-hole in the lower casing 6D. The bottom surface of the loading portion 60D of the lower casing 6D is placed on the upper surface of the disk portion 31 of the shaft 3. Bushings 61 are disposed between the inner circumferential surface of the through-hole in the lower casing 6D and the outer circumferential surface of the shaft portion 30 of the shaft 3, and between the bottom surface of the loading portion 60D of the lower casing 6D and the upper surface of the disk portion 31 of the shaft 3. Consequently, the casings 6U and 6D are rotatably attached to the shaft 3.

### (Description of Bearing Portion)

Bearing portions for bearing rotary shafts, such as gears of the speed reduction mechanism 7 are disposed on the inner surfaces of the upper casing 6U and the lower casing 6D.

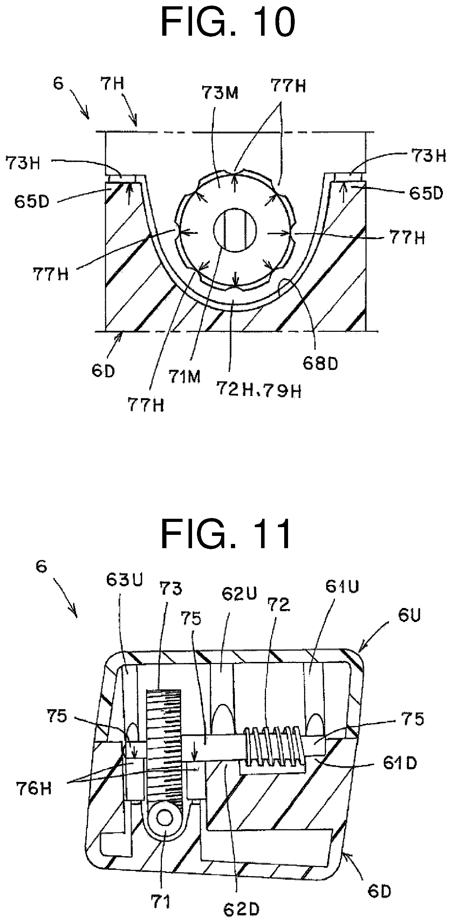

That is, a first bearing portion 61U, a second bearing portion 62U and a third bearing portion 63U, which have a shape of a rod (round rod), are disposed on the upper casing 6U, as illustrated in FIG. 11. The second bearing portion 62U and the third bearing portion 63U also serve as positioning portions.

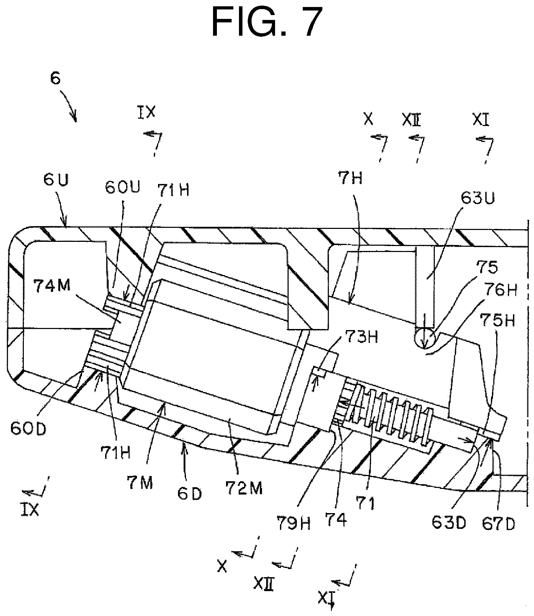

A first bearing portion 61D and a second bearing portion 62D are disposed on the lower casing 6D. The first bearing portion 61D and the second bearing portion 62D of the lower casing 6D and the first bearing portion 61U and the second bearing portion 62U of the upper casing 6U respectively face each other. A third bearing portion 63D, which also serves as a thrust load bearing portion, is disposed on the lower casing 6D, as illustrated in FIG. 7.

### (Description of Positioning Portions)

Positioning portions that position and fixe the holding member 7H by sandwiching the holding member 7H are disposed on the upper casing 6U and the lower casing 6D.

A first positioning portion 64U, a second positioning portion that also serves as the second bearing portion 62U, and a third positioning portion that also serves as the third bearing portion 63U are disposed on the upper casing 6U. The first positioning portion 64U has a concave arc shape, as illustrated in FIG. 9.

A first positioning portion 64D, second positioning portions 65D, third positioning portions 66D, and a fourth positioning portion 67D are disposed on the lower casing 6D. The first positioning portion 64D has a concave arc shape, as illustrated in FIG. 9. The first positioning portion 64D of the lower casing 6D and the first positioning portion 64U of the upper casing 6U face each other across an end cap portion 74M of the motor 7M.

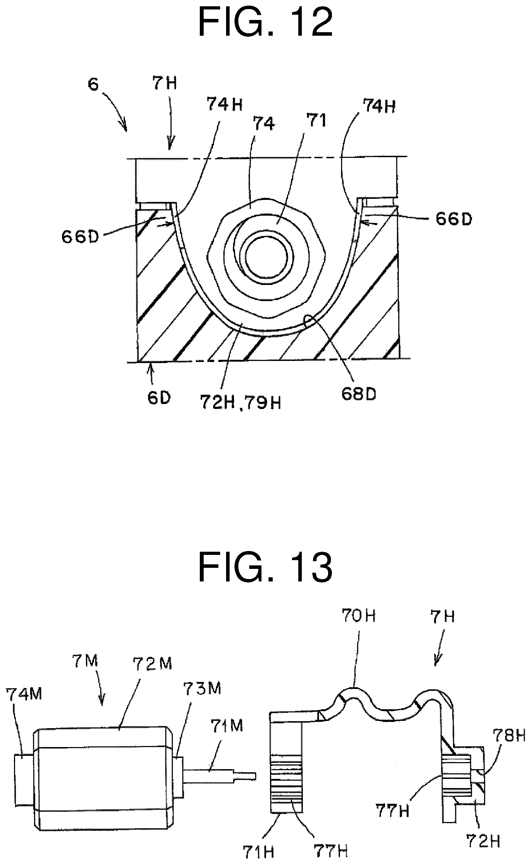

The second positioning portions 65D are disposed near a cylindrical portion 73M of the motor 7M, as illustrated in FIG. 10. The third positioning portions 66D, like the second positioning portions 65D, are disposed near the cylindrical portion 73M of the motor 7M and at both edges of the opening of a U-shaped (semi-oval, semi-major) recess 68D, as illustrated in FIG. 12. The fourth positioning portion 67D is disposed near the third bearing portion 63D, as illustrated in FIG. 7.

### (Description of Spring Member 9S)

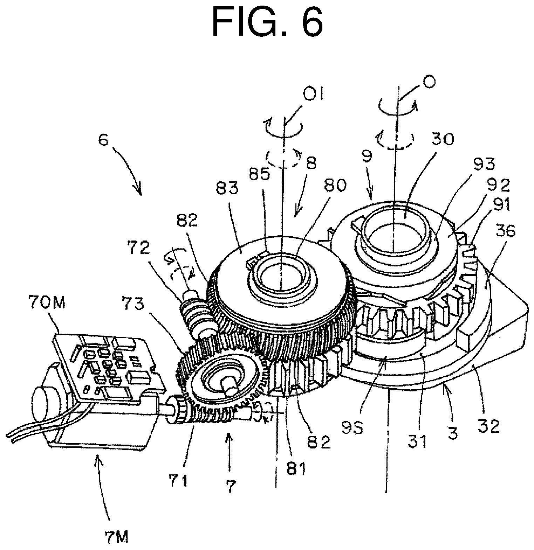

The stopper mechanism includes the spring members 9S, as illustrated in FIGS. 5 and 6. The spring members 9S in this example consists of two plate springs.

The spring members 9S in this example each has holding portions that are held by the lower casing 6D and a contacting portion that is in contact with the shaft 3. That is, the spring member 9S has a shape in which the flat surface is curved into a substantially semicircular shape. The holding portions are bent and disposed on the two end portions of the spring member 9S. The contacting portion having a substantially triangular shape (substantial V-shape, chevron-shape) is disposed in middle portion of the spring member 9S in a manner protruding in the curved direction of the holding portion.

### (Description of Motor 7M)

The motor 7M is attached to the casings 6U and 6D and housed in the casings 6U and 6D via the holding member 7H, as illustrated in FIGS. 5 to 7, 9, 10, and 13 to 16. A switch circuit 70M is disposed on the motor 7M. A terminal is disposed on the switch circuit 70M. The terminal is disposed in the connector portion of the lower casing 6D. By detachably fitting the connector of the harness 52 with the connector portion of the lower casing 6D and electrically connecting the it to the terminal, the motor 7M is powered via the harness 52, the connector, the terminal, and the switch circuit 70M.

The motor 7M includes a drive shaft 71M, a body portion 72M, a cylindrical portion 73M, and an end cap portion 74M. That is, the cylindrical portion 73M is disposed on one side of the body portion 72M. The drive shaft 71M rotatably protrudes from the cylindrical portion 73M. The end cap portion 74M is disposed on the other side opposite to the one side of the body portion 72M.

### (Description of Speed Reduction Mechanism 7)

The speed reduction mechanism 7, together with the motor 7M and the holding member 7H, is attached to the casings 6U and 6D and is housed in the casings 6L and 6D, as illustrated in FIGS. 5 to 7. The speed reduction mechanism 7 includes a first worm gear 71, a second worm gear 72, and a helical gear 73.

The shaft portion of one end of the first worm gear 71 is coupled to the drive shaft 71M of the motor 7M and is axially supported by the third bearing portion 63D of the lower casing 6D, as illustrated in FIG. 7. A thrust load bearing portion 74 is integrally provided at the other end of the first worm gear 71. The contact surface (the surface opposite to the gear portion) of the thrust load bearing portion 74 of the first worm gear 71 and the thrust load bearing surface 79H of the holding member 7H described below are in contact with each other in the thrust direction of the first worm gear 71.

A shaft 75 of the second worm gear 72 is axially supported in a rotatable manner by the first bearing portion 61U, the second bearing portion 62U, and the third bearing portion 63U of the upper casing 6U and the first bearing portion 61D and the second bearing portion 62D of the lower casing 6D, as illustrated in FIG. 11. The helical gear 73 is fixed to the shaft 75 of the second worm gear 72 and meshes with the first worm gear 71.

### (Description of Holding Member 7H)

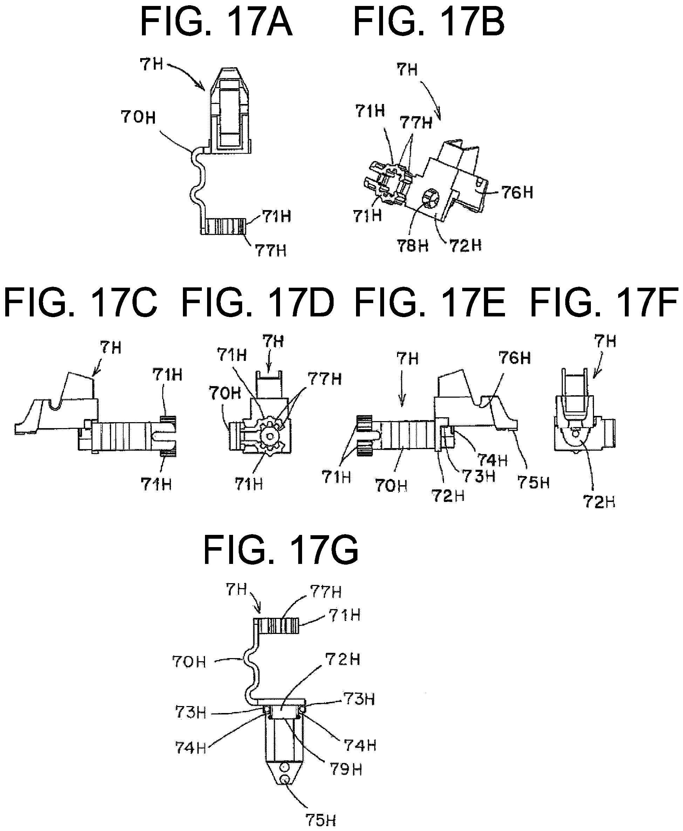

The holding member 7H holds the motor 7M, as illustrated in FIGS. 5, 7, and 9 to 17, and is attached to the casings 6U and 6D and housed in the casings 6U and 6D together with the motor 7M and the speed reduction mechanism 7. The holding member 7H is composed of an elastic member, e.g., POM. The rigidity of the holding member 7H is lower (smaller) than that of the casings 6U and 6D. The holding member 7H allows the motor 7M and the speed reduction mechanism 7 to be attached to the casings 6U and 6D with high precision.

### (Description of Fitted Holding Portion)

The holding member 7H mainly includes a resilient connection portions 70H, a first fitted holding portions 71H, and a second fitted holding portion 72H, as illustrated in FIGS. 13 to 17. The resilient connection portion 70H has a serpentine cross-sectional shape. The first fitted holding portions 71H and the second fitted holding portion 72H are integrally provided at the two ends of the resilient connection portion 70H. That is, the first fitted holding portions 71H and the second fitted holding portion 72H are connected via the resilient connection portion 70H.

The first fitted holding portions 71H are each composed of two arc-shaped portions and is integrally connected to one end of the resilient connection portion 70H via two arm portions (connection portions). The first fitted holding portions 71H are fitted with and holds the end cap portion 74M by sandwiching from above and below the end cap portion 74M from the outer side, as illustrated in FIG. 9. Multiple ribs 77H are integrally provided on the inner surfaces and the outer surfaces of the first fitted holding portions 71H.

The second fitted holding portion 72H includes a U-shaped (semi-oval, semi-major) portion and is integrally connected to the other end of the resilient connection portion 70H. The second fitted holding portion 72H has a cylindrical hollow portion (circular recess) open at the side adjacent to the first fitted holding portions 71H and closed at the opposite side. A small circular through-hole 78H is provided in the closed portion of the second fitted holding portion 72H. The thrust load bearing surface 79H is disposed on a surface opposite to the opening in the closed portion of the second fitted holding portion 72H.

The entire second fitted holding portion 72H is fitted with and holds the cylindrical portion 73M from the outer side, as illustrated in FIG. 10. The multiple ribs 77H are integrally provided on the inner surfaces of the second fitted holding portion 72H. The second fitted holding portion 72H is disposed inside the recess 68D, as illustrated in FIGS. 10 and 12.

### (Description of Positioned Portions)

The holding member 7H includes a first positioned portion that also serves as the first fitted holding portions 71H, two second positioned portions 73H, two third positioned portions 74H, one fourth positioned portion 75H, and two fifth positioned portions 76H, as illustrated in FIG. 7, 10 to 12, and 17.

The first positioned portion (the first fitted holding portions 71H) is sandwiched from above and below by the first positioning portion 64U of the upper casing 6U and the first positioning portion 64D of the lower casing 6D, as illustrated in FIGS. 7 and 9. As a result, the first positioned portion (the first fitted holding portions 71H) is positioned and attached to the casings 6U and 6D via the end cap portion 74M. At this time, the first positioning portions 64U and 64D of the casings 6U and 6D are press-fitted while deforming (crushing) the outer ribs 77H of the first fitted holding portions 71H inwardly, as indicated by the solid arrows in FIG. 9. Consequently, the first positioned portion (the first fitted holding portions 71H) is certainly positioned and attached to the first positioning portions 64U and 64D of the casings 6U and 6D via the end cap portion 74M.

The two second positioned portions 73H are integrally provided on the bottom surface of the lower portion of the holding member 7H and on the two sides of the second fitted holding portion 72H, as illustrated in FIGS. 7, 10, and 11. The one fourth positioned portion 75H is integrally provided on the bottom surface of the holding member 7H remote from the first positioned portion (first fitted holding portions 71H). The two fifth positioned portions 76H are integrally provided on the two sides of a flat surface of the upper portion of the holding member 7H, and between the second positioned portions 73H and the third positioned portions 74H and the fourth positioned portion 75H.

The second positioned portions 73H, the fourth positioned portion 75H, and the fifth positioned portions 76H are sandwiched from above and below by the second positioning portion (the second bearing portion 62U) and the third positioning portion (the third bearing portion 63U) of the upper casing 6U and the second positioning portion 65D and the fourth positioning portion 67D of the lower casing 6D. As a result, the second positioned portions 73H, the fourth positioned portion 75H, and the fifth positioned portions 76H are positioned and attached to the casings 6U and 6D via the shaft 75.

The two third positioned portions 74H are integrally provided on the two sides of the second fitted holding portion 72H, as illustrated in FIG. 12. The third positioned portions 74H is sandwiched from the two sides by the third positioning portions 66D of the lower casing 6D. As a result, the third positioned portions 74H are positioned and attached to the casings 6U and 6D.

As a result, the holding member 7H is held down on the lower side by the second positioned portions 73H and the fourth positioned portion 75H, held down on the upper side by the fifth positioned portions 76H, and is positioned in the height direction (vertical direction, axial direction of the shaft 3). The holding member 7H is positioned in the height direction of to maintain the distance between the shaft of the first worm gear 71 and the shaft of the helical gear 73 and the relative tilt accuracy between the shaft of the first worm gear 71 and the shaft of the helical gear 73. This results in good meshing between the first worm gear 71 and the helical gear 73 and allows smooth transmission of the rotational force of the motor 7M.

### (Explanation of Assembly Process of Holding Member 7H, Motor 7M, and First Worm Gear 71)

The assembly process of the holding member 7H, the motor 7M, and the first worm gear 71 will now be described with reference to FIGS. 13 to 16.

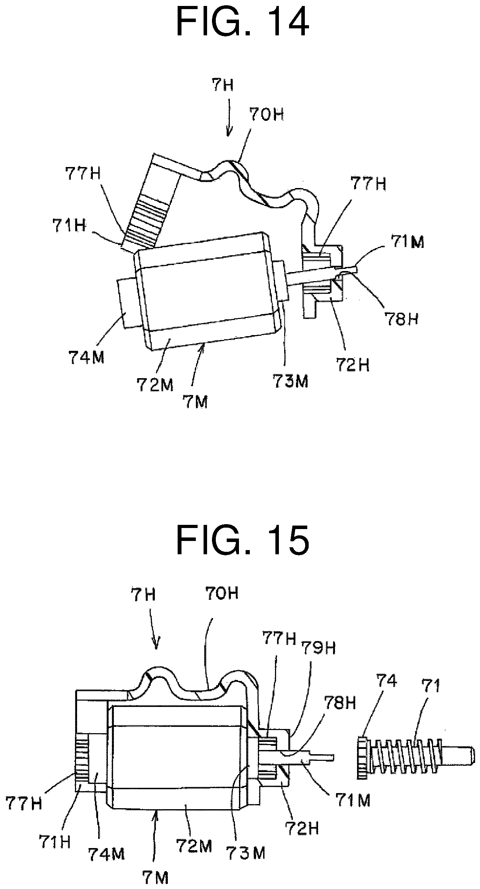

First, in a state in which the resilient connection portion 70H of the holding member 7H is bent, the drive shaft 71M of the motor 7M is inserted into the through-hole 78H in the second fitted holding portion 72H of the holding member 7H (see FIG. 14). Note that the drive shaft 71M is rotatable in the through-hole 78H.

Next, the cylindrical portion 73M of the motor 7M is fitted into the second fitted holding portion 72H of the holding member 7H. Consequently, the cylindrical portion 73M is held in the second fitted holding portion 72H. At this time, the cylindrical portion 73M is press-fitted while deforming (crushing) the ribs 77H of the second fitted holding portion 72H, as indicated by the solid arrows in FIG. 10. As a result, the cylindrical portion 73M is certainly held by the second fitted holding portion 72H.

The end cap portion 74M of the motor 7M is sandwiched from above and below by the first fitted holding portions 71H of the holding member 7H. Consequently, the end cap portion 74M is fitted with and held by the first fitted holding portions 71H, as illustrated in FIG. 15. At this time, the end cap portion 74M is press-fitted while deforming (crushing) the inner ribs 77H of the first fitted holding portions 71H outwardly, as indicated by the solid arrows in FIG. 9. As a result, the end cap portion 74M is certainly held by the first fitted holding portions 71H.

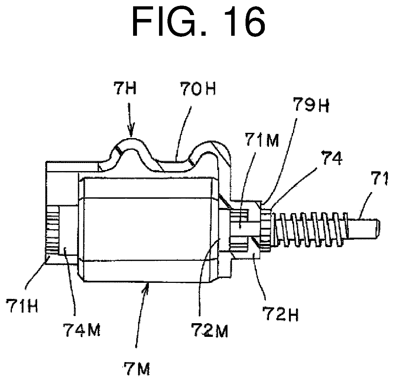

Then, the first worm gear 71 is coupled to the drive shaft 71M of the motor 7M held by the holding member 7H. Furthermore, the contact surface of the thrust load bearing portion 74 of the first worm gear 71 and the thrust load bearing surface 79H of the holding member 7H are in contact with each other in the thrust direction of the first worm gear 71, as illustrated in FIG. 16.

As described above, the assembly process of the holding member 7H, the motor 7M, and the first worm gear 71 is completed. The assembled holding member 7H, the motor 7M, and the first worm gear 71, together with the second worm gear 72 and the helical gear 73, are positioned and attached to the casings 6U and 6D by the bearing portions and positioning portions of the casings 6U and 6D.

### (Description of Clutch Mechanism 8)

The clutch mechanism 8 is attached to the casings 6U and 6D and housed in the casings 6U and 6D, as illustrated in FIGS. 5 and 6. The clutch mechanism 8 includes a clutch shaft 80, a first clutch gear 81 as a first clutch, a second clutch gear 82 as a second clutch and a clutch 86, a plurality of washers 83, two washers in this example, a coiled clutch spring 84, and a C-ring 85.

The second clutch in this example consists of a second clutch gear 82 and a clutch 86 provided separately. The second clutch gear 82 and the clutch 86 are fitted to each other so that they do not rotate relative to each other. However, the second clutch may consist of the second clutch gear 82 and the clutch 86 provided as an integrate body.

The lower end of the clutch shaft 80 is attached to the lower casing 6D. The center line (hereinafter referred to as the "shaft center line") O1 of the clutch shaft 80 is parallel or nearly parallel to the shaft 3, i.e., the rotation center line O.

The clutch shaft 80 is fitted from the outer side with, in order from bottom to top, the clutch spring 84, the first clutch gear 81, the clutch 86, the second clutch gear 82, two washers 83, and the C-ring 85. Consequently, the clutch mechanism 8 is provided as a single unit in between the lower end flange portion of the clutch shaft 80 and the C-ring 85 at the upper end of the clutch shaft 80. The second clutch gear 82 meshes with the second worm gear 72.

A plurality of notch protrusions, three in this example, are disposed on the upper surface of the first clutch gear 81 at equal intervals or substantially equal intervals in the circumferential direction around the shaft center line O1. The plurality of notch depressions, three in this example, are disposed on the lower surface of the clutch 86 at equal or approximately equal intervals in the circumferential direction around the shaft center line 01, in such a manner to correspond to the three notch protrusions of the first clutch gear 81. Note that the notch depressions may be disposed on the first clutch gear 81 and the notch protrusions may be disposed on the clutch 86. In the case where the second clutch gear 82 as the second clutch and the clutch 86 are integrated, the notch depressions or the notch protrusions are disposed on the second clutch gear 82.

Under normal conditions, the notch protrusions of the first clutch gear 81 and the notch depressions of the clutch 86 are fitted together by the spring force of the clutch spring 84 in an engaged state, are not disengaged by the rotational force of the motor 7M, and transmit the rotational force of the motor 7M to the rotational force transmission mechanism 9 via the speed reduction mechanism 7. When an external force greater than the rotational force of the motor 7M is applied to the visual recognition assembly 4, the notch protrusions of the first clutch gear 81 and the notch depressions of the clutch 86 are disengaged from the fitted state against the spring force of the clutch spring 84 in a disengaged state, so that the external force greater than the rotational force of the motor 7M is not transmitted to the speed reduction mechanism 7, and the visual recognition assembly 4 is rotated.

Note that the entire clutch mechanism 8 in this example is housed in the casings 6U and 6D.

However, a portion of the clutch mechanism 8, such as a portion of the clutch shaft 80 or the clutch spring 84, may be disposed outside the casings 6U and 6D.

### (Explanation of Rotational Force Transmission Mechanism 9)

The rotational force transmission mechanism 9 is attached on the shaft 3 and is housed in the casings 6U and 6D, as illustrated in FIGS. 5 and 6. The rotational force transmission mechanism 9 transmits the rotational force of the motor 7M to the casings 6U and 6D via the speed reduction mechanism 7 and the clutch mechanism 8 to rotate the visual recognition assembly 4 between the use position A and the rear retracted position B.

The rotational force transmission mechanism 9 includes a washer 90, a lift gear 91 as a first lift member, a lift holder 92 as a second lift member, and a C-ring 93. A circular through-hole is provided in the center of the lift gear 91. A nearly octagonal (or serrated or splined) through-hole is provided in the center of the lift holder 92.

The washer 90 is fitted to the shaft portion 30 of the shaft 3 from the upper side. The lift gear 91 is disposed on the washer 90 and is fitted from the upper side to the shaft portion 30 of the shaft 3 so to be rotatable around the rotation center line O and shiftable in the direction of the rotation center line O. The lift holder 92 is disposed on the lift gear 91 and is fitted from the outer side to the engagement portion 33 of the shaft portion 30 of the shaft 3 so as to be non-rotatable around the rotation center line O and shiftable in the direction of the rotation center line O. The C-ring 93 is disposed on the lift holder 92 and is fitted from the outer side to the engagement groove 34 of the shaft portion 30 of the shaft 3.

The washer 90, the lift gear 91, the lift holder 92, and the C-ring 93 are housed in the casings 6U and 6D. The lift gear 91 meshes with the second clutch gear 82.

A plurality of rattle stop protrusions (notch protrusions) 910 as rattle stop portions, five rattle stop portions in this example, are disposed on the upper surface of the lift gear 91 at equal or substantially equal intervals in the circumferential direction around the rotation center line O. A plurality of rattle stop depressions (notch depressions) 920 as rattle stop portions, five rattle stop portions in this example, are disposed on the lower surface of the lift holder 92 at equal or substantially equal intervals in the circumferential direction around the rotation center line O, to be corresponding to the five rattle stop protrusions 910 of the lift gear 91.

The rattle stop protrusions 910 and the rattle stop depressions 920 disperse the force in the rotational direction (around the rotation center line O) of the shaft 3 by the rotational force of the motor 7M applied to the lift gear 91 in the axial direction of the shaft 3 and the rotational direction of the shaft 3 when the visual recognition assembly 4 is positioned in the use position A or the rear retracted position B. This allows the rattle of the shaft 3 in the axial direction and the rattle of the shaft 3 in the rotational direction to be stopped at the shaft portion 30 of the shaft 3.

### (Explanation of Operation of Embodiments)

The electric retractable periphery visual recognition device for vehicle 1 according to an embodiment has the configuration described above, and the operation thereof will now be described. Note that, in FIG. 6, the directions of the dashed arrows indicate the directions in which the components of the speed reduction mechanism 7, the clutch mechanism 8, and the rotational force transmission mechanism 9 rotate when the visual recognition assembly 4 rotates from the use position A to the rear retracted position B (during rearward retraction). In FIG. 6, the directions of the solid arrows indicate the direction in which the components of the speed reduction mechanism 7, the clutch mechanism 8, and the rotational force transmission mechanism 9 rotate when the visual recognition assembly 4 rotates (returns) from the use position A to the rear retracted position B.

### (Explanation of Electric Rearward Retraction)

When the visual recognition assembly 4 is positioned in the use position A illustrated in FIG. 2, the drive shaft of the motor 7M is rotated forward (or reverse) and thereby the first worm gear 71 of the speed reduction mechanism 7 is rotated in a direction indicated by the dashed arrow in FIG. 6. Then, the first clutch gear 81, the clutch 86, and the second clutch gear 82 as the second clutch of the clutch mechanism 8 rotate in the counterclockwise direction (in the direction of the dashed arrow) around the shaft center line 01 via the first worm gear 71, the helical gear 73, and the second worm gear 72 of the speed reduction mechanism 7.

Accordingly, in the rotational force transmission mechanism 9, the lift gear 91 rotates in a clockwise direction (in the direction of the dashed arrow) around the rotation center line O relative to the lift holder 92, and the tilting side faces of the rattle stop protrusions 910 of the lift gear 91 comes into contact with the tilting side faces of the rattle stop depressions 920 of the lift holder 92 to stop the rotation of the lift gear 91.

When rotation of the lift gear 91 stops, a reaction force from the shaft 3 is generated. Therefore, the first clutch gear 81, the clutch 86, and the second clutch gear 82 rotate in the counterclockwise direction around the rotation center line O while they rotate in the counterclockwise direction around the shaft center line O1. Consequently, the first clutch gear 81, the clutch 86, and the second clutch gear 82 press the clutch shaft 80 and the casings 6U and 6D in the counterclockwise direction around the rotation center line O.

As a result, the visual recognition assembly 4 is electrically rotated from the use position A to the rear retracted position B. At this time, the casings 6U and 6D and the spring member 9S rotate in the counterclockwise direction around the rotation center line O. When the visual recognition assembly 4 is positioned in the rear retracted position B illustrated in FIG. 2, the rotation of the visual recognition assembly 4 stops due to the operation of at least one of the stopper mechanism and the retraction operation range restricting mechanism.

Then, the motor 7M stalls, a lock current flows, and the motor 7M torque is output as the maximum torque. Then, the forward rotation of the motor 7M stops due to the operation of the switch circuit 70M, and thereby the visual recognition assembly 4 is stopped and positioned in the rear retracted position B.

### (Explanation of Electrical Return to Use Position)

When the visual recognition assembly 4 is positioned in the rear retracted position B, the drive shaft of the motor 7M is rotated in reverse (or forward). Then, the first clutch gear 81, the clutch 86, and the second clutch gear 82 rotate in the clockwise direction around the shaft center line O1 via the speed reduction mechanism 7, in the direction opposite to that of the above-described electric rearward retraction.

Accordingly, the lift gear 91 rotates in the clockwise direction around the rotation center line O relative to the lift holder 92, and the tilting side faces of the rattle stop protrusions 910 of the lift gear 91 comes into contact with the tilting side faces of the rattle stop depressions 920 of the lift holder 92 to stop the rotation of the lift gear 91.

When rotation of the lift gear 91 stops, a reaction force from the shaft 3 is generated. Therefore, the first clutch gear 81, the clutch 86, and the second clutch gear 82 rotate in the clockwise direction around the rotation center line O while they rotate in the clockwise direction around the shaft center line O1. Consequently, the first clutch gear 81, the clutch 86, and the second clutch gear 82 press the clutch shaft 80 and the casings 6U and 6D in the clockwise direction around the rotation center line O. As a result, the visual recognition assembly 4 is electrically rotated from the rear retracted position B to the use position A.

The rotation of the visual recognition assembly 4 stops upon the visual recognition assembly 4 being positioned in the use position A illustrated in FIG. 2. Then, the motor 7M stalls, a lock current flows, and the motor 7M torque is output as the maximum torque. Then, the reverse rotation of the motor 7M stops due to the operation of the switch circuit 70M, and thereby the visual recognition assembly 4 is returns to the use position A and is positioned and stopped there.

### (Explanation of Manual Operation)

The visual recognition assembly 4 in the use position A can be rotated to the rear E of the vehicle V by manual operation. The visual recognition assembly 4 in the rear retracted position B can be rotated by manual operation to return to the use position A.

Moreover, the visual recognition assembly 4 in the use position A can be rotated to the front F of the vehicle V by manual operation. Furthermore, the visual recognition assembly 4 in the front retracted position C can be rotated by manual operation to return to the use position A.

### (Advantageous Effects of Embodiment)

The electric retractable periphery visual recognition device for vehicle 1 according to this embodiment has the configuration and operation as described above, and the effects thereof will be described below.

The electric retractable periphery visual recognition device for vehicle 1 according to this embodiment attaches the motor 7M to the casings 6U and 6D via the holding member 7H, and moreover, the casings 6U and 6D are composed of members having high rigidity and the holding member 7H is composed of an elastic member. As a result, the electric retractable periphery visual recognition device for vehicle 1 according to this embodiment can mount the motor 7M to the casings 6U and 6D via the holding member 7H without any rattling, and no rattling is generated between the motor 7M and the casings 6U and 6D. Consequently, the electric retractable periphery visual recognition device for vehicle 1 according to this embodiment can smoothly rotate the visual recognition assembly 4.

The following explains the problem of directly attaching the motor 7M, which is composed of members of high rigidity, to the casings 6U and 6D, which are also composed of members of high rigidity, without using the holding member 7H. That is, since there is no elastic deformation between members having high rigidity, rattling caused by the dimensional tolerance cannot be absorbed and suppressed, and rattling may occur between the directly mounted motor 7M and the casings 6U and 6D. If rattling occurs between the motor 7M and the casings 6U and 6D, it may be difficult to smoothly transmit the rotational force of the motor 7M to the casings 6U and 6D via the speed reduction mechanism 7, and thus the visual recognition assembly 4 may not smoothly rotate.

Therefore, the electric retractable periphery visual recognition device for vehicle 1 according to this embodiment, the holding member 7H, which is composed of an elastic member, is disposed between the motor 7M and the casings 6U and 6D, which are members having high rigidity. As a result, the electric retractable periphery visual recognition device for vehicle 1 according to this embodiment can absorb and suppress the rattling caused by the dimensional tolerance of the motor 7M and the casings 6U and 6D, which are member having high rigidity, by the holding member 7H of the elastic member. Consequently, the electric retractable periphery visual recognition device for vehicle 1 according to this embodiment can smoothly rotate the visual recognition assembly 4.

In the electric retractable periphery visual recognition device for vehicle 1 according to this embodiment, the first fitted holding portions 71H of the holding member 7H is fitted to and holds the end cap portion 74M of the motor 7M from outer side, and the second fitted holding portion 72H of the holding member 7H is fitted to and holds the cylindrical portion 73M of the motor 7M from outer side. As a result, in the electric retractable periphery visual recognition device for vehicle 1 according to this embodiment, the motor 7M and the speed reduction mechanism 7 can be attached to the casings 6U and 6D while the axial direction of the drive shaft 71M of the motor 7M intersects the axial direction of the shaft 3. Consequently, in the electric retractable periphery visual recognition device for vehicle 1 according to this embodiment, the motor 7M and the speed reduction mechanism 7 can be arranged in a direction intersecting the axial direction of the shaft 3, so that the dimension in the axial direction (longitudinal dimension) of the shaft 3 of the visual recognition assembly 4 can be reduced. Accordingly, the electric retractable periphery visual recognition device for vehicle 1 according to this embodiment can use the visual recognition unit 5, such as a camera having a small longitudinal dimension, as an alternative to a mirror.

Since the electric retractable periphery visual recognition device for vehicle 1 according to this embodiment connects the first fitted holding portions 71H and the second fitted holding portion 72H of the holding member 7H via the resilient connection portion 70H, the number of parts and the number of assembly steps can be reduced, and thus the manufacturing cost can be lowered.

In the electric retractable periphery visual recognition device for vehicle 1 according to this embodiment, a plurality of ribs 77H are integrally provided on the inner and outer surfaces of the first fitted holding portions 71H and on the inner surface of the second fitted holding portion 72H. As a result, in the electric retractable periphery visual recognition device for vehicle 1 according to this embodiment, the plurality of ribs 77H of the holding member 7H enables the motor 7M to be attached to the casings 6U and 6D without further rattling, and the visual recognition assembly 4 can be rotated more smoothly.

In the electric retractable periphery visual recognition device for vehicle 1 according to this embodiment, the positioning portions 64D, 65D, 66D, 67D, 62U, 63U, and 64U, which sandwich, position, and attach the positioned portions 71H, 73H, 74H, 75H, and 76H of the holding member 7H, are disposed on the casings 6U and 6D. As a result, in the electric retractable periphery visual recognition device for vehicle 1 according to this embodiment, the motor 7M can be attached at regular positions on the casings 6U and 6D with high precision via the holding member 7H, and can rotate the visual recognition assembly 4 more smoothly.

In the electric retractable periphery visual recognition device for vehicle 1 according to this embodiment, the drive shaft 71M of the motor 7M is coupled to the first worm gear 71 of the speed reduction mechanism 7, and the thrust load bearing surface 79H, which receives the thrust load of the first worm gear 71, is disposed on the holding member 7H. As a result, in the electric retractable periphery visual recognition device for vehicle 1 according to this embodiment, the thrust load of the first worm gear 71 is received by the thrust load bearing surface 79H of the holding member 7H, so that the first worm gear 71 can be rotated smoothly, and the visual recognition assembly 4 can be rotated even more smoothly.

In particular, in the electric retractable periphery visual recognition device for vehicle 1 according to this embodiment, the thrust load bearing portion 74 is disposed on the other end of the first worm gear 71 adjacent to the motor 7M, and the contact surface of the thrust load bearing portion 74 of the first worm gear 71 and the thrust load bearing surface 79H of the holding member 7H come into contact with each other in the thrust direction of the first worm gear 71. As a result, since surfaces come into contact with each other in the electric retractable periphery visual recognition device for vehicle 1 according to this embodiment, there are no slits or steps, and thus there is no excessive wear or catching; therefore, the first worm gear 71 can be rotated even more smoothly, and the visual recognition assembly 4 can be rotated even more smoothly.

Furthermore, in the electric retractable periphery visual recognition device for vehicle 1 according to this embodiment, since the third bearing portion 63D that also serves as a thrust load bearing portion in the lower casing 6D is provided, the thrust load on one end of the first worm gear 71 can be received by the thrust load bearing portion (the third bearing portion 63D). As a result, since surfaces come into contact with each other in the electric retractable periphery visual recognition device for vehicle 1 according to this embodiment, there are no slits or steps, and the first worm gear 71 can be rotated even more smoothly, and the visual recognition assembly 4 can be rotated even more smoothly.

In addition, since in the electric retractable periphery visual recognition device for vehicle 1 according to this embodiment, the shaft portion of one end of the first worm gear 71 is axially supported by the third bearing portion 63D of the lower casing 6D, the first worm gear 71 can be positioned and attached on the lower casing 6D with high precision. As a result, in the electric retractable periphery visual recognition device for vehicle 1 according this embodiment, the motor 7M and the first worm gear 71 can be attached on the casings 6U and 6D in a positioned state with high precision.

In the electric retractable periphery visual recognition device for vehicle 1 according to the first embodiment, the motor 7M, the speed reduction mechanism 7, the clutch mechanism 8, and the rotational force transmission mechanism 9 are disposed in the direction intersecting (orthogonal to or substantially orthogonal to) the axial direction of the shaft 3 (the rotation center line O). As a result, the electric retractable periphery visual recognition device for vehicle 1 according to the first embodiment can reduce the dimension in the axial direction (vertical dimension) of the shaft 3 of the visual recognition assembly 4.

Furthermore, in the electric retractable periphery visual recognition device for vehicle 1 according to the first embodiment, the axial direction of the drive shaft of the motor 7M can be made to intersect the axial direction of the shaft 3, so that the dimension in the axial direction of the shaft 3 of the visual recognition assembly 4 can be reduced.

In the electric retractable periphery visual recognition device for vehicle 1 according to this embodiment, since the visual recognition unit 5 is an image capturing device that captures images of the surroundings of the vehicle V, the dimensions of the housing 4H of the visual recognition assembly 4 housing the visual recognition unit 5, which is an image capturing device, and the electric retractable unit 6, i.e., the dimensions in the axial direction of the shaft 3 of the visual recognition assembly 4 can be certainly reduced in comparison with an outside mirror device that uses a mirror.

The electric retractable periphery visual recognition device for vehicle 1 according to this embodiment can display images, captured by the visual recognition unit 5 as an image capturing device, of the information on the rear side and the lateral side of the vehicle V, on the display devices 5M, 5ML, and 5MR. As a result, the electric retractable periphery visual recognition device for vehicle 1 according to this embodiment allows a driver to visually recognize the images displayed on the display devices 5M, 5ML, and 5MR to visually recognize the rear side and the lateral side of the vehicle V Consequently, the electric retractable periphery visual recognition device for vehicle 1 according to this embodiment can contribute to traffic safety in the same way as mirrors.

### (Description of Examples Other than Embodiments)

Note that, the invention is not limited to the embodiments described above. The extent of the protection conferred by the invention shall be determined by the appended claims. Nevertheless, the description and drawings shall be used to interpret the claims.

In the above-described embodiment, multiple ribs 77H are integrally provided on the inner and outer surfaces of the first fitted holding portions 71H and on the inner surface of the second fitted holding portion 72H. However, multiple ribs 77H may be provided on at least one of the inner surfaces of the first fitted holding portions 71H, the outer surfaces of the first fitted holding portions 71H, and the inner surface of the second fitted holding portion 72H, or no ribs may be provided.

### DESCRIPTION OF REFERENCE NUMERALS

1 visual recognition device (electric retractable periphery visual recognition device for vehicle)
2 base
20 coupling portion
21 first fixing portion
22 second fixing portion
3 shaft
30 shaft portion
31 disk portion
32 fixed portion
33 engagement portion
34 engagement groove
35 electrically operated range restricting protrusion (stopper mechanism)
351 first contact surface
352 second contact surface
36 retracting operation range restricting protrusion
361 first contact surface
362 second contact surface
4 visual recognition assembly
4H housing
40 through-hole
5 visual recognition unit
50 body
51 lens
52 harness
54 image processing device
55, 56 signal line
57 detection device
5M, 5ML, 5MR display device (monitor)
6 electric retractable unit
6D lower casing
6U upper casing
60 screw
61 bush.
60D loading portion
61D first bearing portion
62D second bearing portion
63D third bearing portion (thrust load bearing portion)
64D first positioning portion
65D second positioning portion
66D third positioning portion
67D fourth positioning portion
68D recess
60U through-hole
61U first bearing portion
62U second bearing portion (second positioning portion)
63U third bearing portion (third positioning portion)
64U first positioning portion
7 speed reduction mechanism
71 first worm gear
72 second worm gear
73 helical gear
74 thrust load bearing portion
75 shaft
7H holding member
70H resilient connection portion
71H first fitted holding portion (first positioned portion)
72H second fitted holding portion
73H second positioned portion
74H third positioned portion
75H fourth positioned portion
76H fifth positioned portion
77H rib
78H through-hole
79H thrust load bearing portion
7M motor
70M Switch circuit
71M drive shaft
72M body portion
73M cylindrical portion
74M end cap portion
8 clutch mechanism
80 clutch shaft
81 first clutch gear (first clutch)
82 second clutch gear (second clutch)
83 washer
84 clutch spring
85 C-ring
86 clutch (second clutch)
9 rotational force transmission mechanism
90 washer
91 lift gear (first lift member)
910 rattle stop protrusion
92 lift holder (second lift member)
920 rattle stop depression
93 C-ring
9S spring member (stopper mechanism)
A use position
B rear retracted position
C front retracted position
D door (vehicle body)
E rear of vehicle V
F front of vehicle V
O rotation center line (rotation center line of visual recognition assembly 4, center line of shaft portion 30 of shaft 3)
O1 shaft center line (center line of clutch shaft 80)
V vehicle
ΘB rearward rotation retraction angle
ΘC forward rotation retraction angle

## Claims

1. An electric retractable periphery visual recognition device (1) for a vehicle (V) comprising:
a base (2) fixed to a vehicle body;
a shaft (3) fixed to the base (2); and
a visual recognition assembly (4) rotatably attached to the shaft (3), wherein,
the visual recognition assembly (4) comprises:
a housing (4H);
a visual recognition unit (5) mounted on the housing (4H);
an electric retractable unit (6) that rotates the visual recognition assembly (4) between a use position (A) and a rear retracted position (B), at least a portion of the electric retractable unit (6) being housed inside the housing (4H),
**characterized in that**
the electric retractable unit (6) comprises:
the shaft fixed (3) to the base;
a casing (6U, 6D) rotatably attached to the shaft (3) and fixed to the housing (4H);
a motor (7M) and a speed reduction mechanism (7) attached to the casing (6U, 6D) and housed inside the casing (6U, 6D); and
a holding member (7H) that holds the motor (7M) and is attached to and housed inside the casing (6U, 6D) together with the motor (7M) and the speed reduction mechanism (7) ,
the casing (6U, 6D) comprises a member having a rigidity higher than the rigidity of the holding member (7H), and comprises a positioning portion (64U, 62U, 63U, 64D, 65D, 66D, 67D) that sandwiches, positions, and fixes the holding member (7H), and
the holding member (7H) comprises an elastic member.

2. The electric retractable periphery visual recognition device (1) for a vehicle (V) according to claim 1, wherein,
the motor (7M) comprises:
a body portion (72M);
a cylindrical portion (73M) disposed on one side of the body portion (72M);
a drive shaft (71M) that rotatably protrudes from the cylindrical portion (73M); and
an end cap portion (74M) disposed on an other side of the body portion (72M) opposite to the one side of the body portion (72M),
and
the holding member (7H) comprises:
a first fitted holding portion (71H) that is fitted on and holds the end cap portion (74M) from outside; and
a second fitted holding portion (72H) that is fitted on and holds the cylindrical portion (73M) from outside.

3. The electric retractable periphery visual recognition device (1) for a vehicle (V) according to claim 2, wherein the first fitted holding portion (71H) and the second fitted holding portion (72H) are connected to each other via a resilient connection portion (70H).

4. The electric retractable periphery visual recognition device (1) for a vehicle (V) according to claim 2, further comprising: a plurality of ribs (77H) that are disposed on at least one of an inner surface of the first fitted holding portion (71H) facing the cylindrical portion (73M), an inner surface of the second fitted holding portion (72H) facing the end cap portion (74M), and an outer surface of the second fitted holding portion (72H) facing the casing (6U, 6D).

5. The electric retractable periphery visual recognition device (1) for a vehicle (V) according to claim 1, wherein the motor (7M) comprises a drive shaft (71M), wherein the drive shaft (71M) is coupled to a worm gear (71) of the speed reduction mechanism (7), and wherein the holding member (7H) has a thrust load bearing surface (79H) that bears a thrust load of the worm gear (71).

6. The electric retractable periphery visual recognition device (1) for a vehicle (V) according to claim 1,
wherein the electric retractable unit (6) is attached to the casing (6U, 6D), is in an engaged state under normal conditions, and transmits a rotational force of the motor (7M) to the casing (6U, 6D) through the speed reduction mechanism (7), the electric retractable unit (6) enters a disengaged state when a greater force that is greater than the rotational force transmitted from the motor (7M) is applied to the visual recognition assembly (4) and does not transmit the greater force from the visual recognition assembly (4) to the speed reduction mechanism (7),
wherein the electric retractable unit (6) comprises:
a clutch mechanism (8) that rotates the visual recognition assembly (4);
a rotational force transmission mechanism (9) that is attached to the shaft (3), transmits the rotational force of the motor (7M) to the casing via the speed reduction mechanism (7) and the clutch mechanism (8), and rotates the visual recognition assembly (4) between the use position and the rear retracted position; and
a stopper mechanism that stops the visual recognition assembly (4) at the use position and the rear retracted position,
wherein the motor (7M), the speed reduction mechanism (7), at least a portion of the clutch mechanism (8), and the rotational force transmission mechanism (9) are housed inside the casing (6U, 6D),
wherein the motor (7M), the speed reduction mechanism (7), and the clutch mechanism (8) are disposed along a direction intersecting an axial direction of the shaft (3), and
wherein an axial direction of a drive shaft (71M) of the motor (7M) and the axial direction of the shaft (3) intersect each other.

7. The electric retractable periphery visual recognition device (1) for a vehicle (V) according to claim 1, wherein the visual recognition unit (5) is an image capturing device that captures an image of the surroundings of the vehicle (V).

8. The electric retractable periphery visual recognition device for a vehicle according to claim 7, further comprising: a display device (5M, 5ML, 5MR) that is mounted in an interior of the vehicle (V) and displays the image of the surroundings of the vehicle (V) captured by the image capturing device.

## Patentansprüche

1. Elektrisch einziehbares visuelles Peripherie-Erkennungsgerät (1) für ein Fahrzeug (V), das Folgendes umfasst:
eine an einer Fahrzeugkarosserie befestigte Basis (2);
eine an der Basis (2) befestigte Welle (3); und
eine drehbar an der Welle (3) angebrachte visuelle Erkennungsanordnung (4), wobei die visuelle Erkennungsanordnung (4) Folgendes umfasst:
ein Gehäuse (4H);
eine am Gehäuse (4H) montierte visuelle Erkennungseinheit (5);
eine elektrisch einziehbare Einheit (6), die die visuelle Erkennungsanordnung (4) zwischen einer Gebrauchsposition (A) und einer hinteren eingezogenen Position (B) dreht, wobei mindestens ein Teil der elektrisch einziehbaren Einheit (6) im Inneren des Gehäuses (4H) untergebracht ist,
**dadurch gekennzeichnet, dass**
die elektrisch einziehbare Einheit (6) Folgendes umfasst:
die an der Basis befestigte Welle (3);
eine drehbar an der Welle (3) angebrachte und am Gehäuse (4H) befestigte Kapsel (6U, 6D);
einen Motor (7M) und einen an der Kapsel (6U, 6D) angebrachten und in der Kapsel (6U, 6D) untergebrachten Geschwindigkeitsreduzierungsmechanismus (7); und
ein Halteelement (7H), das den Motor (7M) hält und zusammen mit dem Motor (7M) und dem Geschwindigkeitsreduzierungsmechanismus (7) an der Kapsel (6U, 6D) angebracht und darin untergebracht ist,
wobei die Kapsel (6U, 6D) ein Element mit einer höheren Steifigkeit als die Steifigkeit des Halteelements (7H) aufweist und einen Positionierungsteil (64U, 62U, 63U, 64D, 65D, 66D, 67D) umfasst, der das Halteelement (7H) einschließt, positioniert und befestigt, und
das Halteelement (7H) ein elastisches Element umfasst.

2. Elektrisch einziehbares visuelles Peripherie-Erkennungsgerät (1) für ein Fahrzeug (V) nach Anspruch 1, wobei
der Motor (7M) Folgendes umfasst:
einen Körperteil (72M);
einen zylindrischen Teil (73M), der auf einer Seite des Körperteils (72M) angeordnet ist;
eine Antriebswelle (7lM), die drehbar aus dem zylindrischen Teil (73M) herausragt; und
einen Endkappenteil (74M), der auf einer anderen Seite des Körperteils (72M) gegenüber der einen Seite des Körperteils (72M) angeordnet ist;
und
das Halteelement (7H) Folgendes umfasst:
einen ersten montierten Halteteil (71H), der am Endkappenteil (74M) montiert ist und diesen von außen hält, und
einen zweiten montierten Halteteil (72H), der auf den zylindrischen Teil (73M) montiert ist und diesen von außen hält.

3. Elektrisch einziehbares visuelles Peripherie-Erkennungsgerät (1) für ein Fahrzeug (V) nach Anspruch 2, wobei der erste montierte Halteteil (71H) und der zweite montierte Halteteil (72H) über einen elastischen Verbindungsteil (70H) miteinander verbunden sind.

4. Elektrisch einziehbares visuelles Peripherie-Erkennungsgerät (1) für ein Fahrzeug (V) nach Anspruch 2, das ferner Folgendes umfasst: mehrere Rippen (77H), die auf mindestens einer von einer Innenfläche des ersten montierten Halteteils (71H), die dem zylindrischen Teil (73M) zugewandt ist, einer Innenfläche des zweiten montierten Halteteils (72H), die dem Endkappenteil (74M) zugewandt ist, und einer Außenfläche des zweiten montierten Halteteils (72H), die der Kapsel (6U, 6D) zugewandt ist, angeordnet sind.

5. Elektrisch einziehbares visuelles Peripherie-Erkennungsgerät (1) für ein Fahrzeug (V) nach Anspruch 1, wobei der Motor (7M) eine Antriebswelle (71M) umfasst, wobei die Antriebswelle (71M) mit einem Schneckenrad (71) des Geschwindigkeitsreduzierungsmechanismus (7) gekoppelt ist, und wobei das Halteelement (7H) eine Axialbelastungsfläche (79H) aufweist, die eine Axiallast des Schneckenrads (71) trägt.

6. Elektrisch einziehbares visuelles Peripherie-Erkennungsgerät (1) für ein Fahrzeug (V) nach Anspruch 1,
wobei die elektrische einziehbare Einheit (6) an der Kapsel (6U, 6D) angebracht ist, sich unter normalen Bedingungen in einem eingerückten Zustand befindet und eine Drehkraft des Motors (7M) über den Geschwindigkeitsreduzierungsmechanismus (7) auf die Kapsel (6U, 6D) überträgt, die elektrisch einziehbare Einheit (6) in einen ausgerückten Zustand eintritt, wenn eine größere Kraft, die größer ist als die vom Motor (7M) übertragene Drehkraft, auf die visuelle Erkennungsanordnung (4) ausgeübt wird, und die größere Kraft nicht von der visuellen Erkennungsanordnung (4) auf den Geschwindigkeitsreduzierungsmechanismus (7) überträgt,
wobei die elektrisch einziehbare Einheit (6) Folgendes umfasst:
einen Kupplungsmechanismus (8), der die visuelle Erkennungsanordnung (4) dreht;
einen Drehkraftübertragungsmechanismus (9), der an der Welle (3) angebracht ist, die Drehkraft des Motors (7M) über den Geschwindigkeitsreduzierungsmechanismus (7) und den Kupplungsmechanismus (8) auf die Kapsel überträgt und die visuelle Erkennungsanordnung (4) zwischen der Gebrauchsposition und der hinteren eingezogenen Position dreht, und
einen Stoppmechanismus, der die visuelle Erkennungsanordnung (4) in der Gebrauchsposition und der hinteren eingezogenen Position stoppt,
wobei der Motor (7M), der Geschwindigkeitsreduzierungsmechanismus (7), zumindest ein Teil des Kupplungsmechanismus (8) und der Drehkraftübertragungsmechanismus (9) innerhalb der Kapsel (6U, 6D) untergebracht sind,
wobei der Motor (7M), der Geschwindigkeitsreduzierungsmechanismus (7) und der Kupplungsmechanismus (8) entlang einer Richtung angeordnet sind, die eine axiale Richtung der Welle (3) schneidet, und
wobei eine axiale Richtung einer Antriebswelle (71M) des Motors (7M) und die axiale Richtung der Welle (3) einander schneiden.

7. Elektrisch einziehbares visuelles Peripherie-Erkennungsgerät (1) für ein Fahrzeug (V) nach Anspruch 1, wobei die visuelle Erkennungseinheit (5) ein Bildaufnahmegerät ist, das ein Bild der Umgebung des Fahrzeugs (V) aufnimmt.

8. Elektrisch einziehbares visuelles Peripherie-Erkennungsgerät (1) für ein Fahrzeug nach Anspruch 7, das ferner Folgendes umfasst: ein Anzeigegerät (5M, 5ML, 5MR), das in einem Innenraum des Fahrzeugs (V) angebracht ist und das von dem Bildaufnahmegerät aufgenommene Bild der Umgebung des Fahrzeugs (V) anzeigt.

## Revendications

1. Dispositif de reconnaissance visuelle périphérique rétractable électrique (1) pour un véhicule (V) comprenant :
une base (2) fixée à une carrosserie de véhicule ;
un arbre (3) fixé à la base (2) ; et
un ensemble de reconnaissance visuelle (4) fixé de manière rotative à l'arbre (3), dans lequel l'ensemble de reconnaissance visuelle (4) comprend :
un boîtier (4H) ;
une unité de reconnaissance visuelle (5) montée sur le boîtier (4H) ;
une unité rétractable électrique (6) qui fait pivoter l'ensemble de reconnaissance visuelle (4) entre une position d'utilisation (A) et une position rétractée arrière (B), au moins une partie de l'unité rétractable électrique (6) étant logée à l'intérieur du boîtier (4H) ;
**caractérisé en ce que**
l'unité rétractable électrique (6) comprend :
l'arbre fixé (3) à la base ;
un carter (6U, 6D) fixé de manière rotative à l'arbre (3) et fixé au boîtier (4H) ;
un moteur (7M) et un mécanisme de réduction de vitesse (7) fixés au carter (6U, 6D) et logés à l'intérieur du carter (6U, 6D) ; et
un élément de maintien (7H) qui maintient le moteur (7M) et qui est fixé et logé à l'intérieur du carter (6U, 6D) avec le moteur (7M) et le mécanisme de réduction de vitesse (7),
le carter (6U, 6D) comprend un élément d'une rigidité supérieure à la rigidité de l'élément de maintien (7H) et comprend une partie de positionnement (64U, 62U, 63U, 64D, 65D, 66D, 67D) qui prend en sandwich, positionne et fixe l'élément de maintien (7H), et
l'élément de maintien (7H) comprend un élément élastique.

2. Dispositif de reconnaissance visuelle périphérique rétractable électrique (1) pour un véhicule (V) selon la revendication 1, dans lequel,
le moteur (7M) comprend :
une partie de corps (72M) ;
une partie cylindrique (73M) disposée sur un premier côté de la partie de corps (72M) ;
un arbre d'entraînement (71M) qui dépasse de manière rotative de la partie cylindrique (73M) ; et
une partie de coiffe d'extrémité (74M) disposée sur un autre côté de la partie de corps (72M) opposé au premier côté de la partie de corps (72M) et l'élément de maintien (7H) comprend :
une première partie de maintien montée (71H) qui est montée sur la partie de coiffe d'extrémité (74M) et maintient celle-ci de l'extérieur ; et
une seconde partie de maintien montée (72H) qui est montée sur la partie cylindrique (73M) et maintient celle-ci de l'extérieur.

3. Dispositif de reconnaissance visuelle périphérique rétractable électrique (1) pour un véhicule (V) selon la revendication 2, dans lequel la première partie de maintien montée (71H) et la seconde partie de maintien montée (72H) sont raccordées l'une à l'autre par une partie de raccordement élastique (70H).

4. Dispositif de reconnaissance visuelle périphérique rétractable électrique (1) pour un véhicule (V) selon la revendication 2, comprenant en outre : une pluralité de nervures (77H) qui sont disposées sur au moins une d'une surface intérieure de la première partie de maintien montée (71H) faisant face à la partie cylindrique (73M), d'une surface intérieure de la seconde partie de maintien montée (72H) faisant face à la partie de coiffe d'extrémité (74M), et d'une surface extérieure de la seconde partie de maintien montée (72H) faisant face au carter (6U, 6D).

5. Dispositif de reconnaissance visuelle périphérique rétractable électrique (1) pour un véhicule (V) selon la revendication 1, dans lequel le moteur (7M) comprend un arbre d'entraînement (71M), dans lequel l'arbre d'entraînement (71M) est couplé à un engrenage à vis sans fin (71) du mécanisme de réduction de vitesse (7), et dans lequel l'élément de maintien (7H) présente une surface porteuse de poussée axiale (79H) qui supporte une poussée axiale de l'engrenage à vis sans fin (71).

6. Dispositif de reconnaissance visuelle périphérique rétractable électrique (1) pour un véhicule (V) selon la revendication 1,
dans lequel l'unité rétractable électrique (6) est fixée au carter (6U, 6D), dans des conditions normales est dans un état enclenché, et transmet une force de rotation du moteur (7M) au carter (6U, 6D) par le biais du mécanisme de réduction de vitesse (7), l'unité rétractable électrique (6) entre dans un état désenclenché lorsqu'une force supérieure qui est supérieure à la force de rotation transmise par le moteur (7M) est appliquée à l'ensemble de reconnaissance visuelle (4) et ne transmet pas la force supérieure de l'ensemble de reconnaissance visuelle (4) au mécanisme de réduction de vitesse (7),
dans lequel l'unité rétractable électrique (6) comprend :
un mécanisme d'embrayage (8) qui fait tourner l'ensemble de reconnaissance visuelle (4) ;
un mécanisme de transmission de force de rotation (9) qui est fixé à l'arbre (3) transmet la force de rotation du moteur (7M) au carter par l'intermédiaire du mécanisme de réduction de vitesse (7) et du mécanisme d'embrayage (8), et fait tourner l'ensemble de reconnaissance visuelle (4) entre la position d'utilisation et la position rétractée arrière ; et
un mécanisme d'arrêt qui arrête l'ensemble de reconnaissance visuelle (4) à la position d'utilisation et à la position rétractée arrière,
dans lequel le moteur (7M), le mécanisme de réduction de vitesse (7), au moins une partie du mécanisme d'embrayage (8), et le mécanisme de transmission de force de rotation (9) sont logés à l'intérieur du carter (6U, 6D),
dans lequel le moteur (7M), le mécanisme de réduction de vitesse (7) et le mécanisme d'embrayage (8) sont disposés le long d'une direction qui intersecte une direction axiale de l'arbre (3), et
dans lequel la direction axiale d'un arbre d'entraînement (71M) du moteur (7M) et la direction axiale de l'arbre (3) s'intersectent.

7. Dispositif de reconnaissance visuelle périphérique rétractable électrique (1) pour un véhicule (V) selon la revendication 1, dans lequel l'unité de reconnaissance visuelle (5) est un dispositif de capture d'images qui capture une image de l'environnement du véhicule (V).

8. Dispositif de reconnaissance visuelle périphérique rétractable électrique pour un véhicule selon la revendication 7, comprenant en outre : un dispositif d'affichage (5M, 5ML, 5MR) qui est monté dans un intérieur du véhicule (V) et affiche l'image de l'environnement du véhicule (V) capturée par le dispositif de capture d'images.
